# FASCICULE DE BREVET EUROPEEN

(11) **EP 3 377 405 B1**
(45) Date de publication et mention de la délivrance du brevet: **29.01.2020**
(21) Numéro de dépôt: 16809500.8
(22) Date de dépôt: 18.11.2016
(51) Int. Cl.: B64C 39/02, A63H 27/00

(54) **DRONE À STOCKAGE ÉLECTRIQUE RÉPARTI**
DROHNE MIT VERTEILTER ELEKTRISCHER SPEICHERUNG
DRONE WITH DISTRIBUTED ELECTRICAL STORAGE

(30) Priorité: 19.11.2015 FR 1561161
(43) Date de publication de la demande: 26.09.2018
(73) Titulaire: Chouette, 77165 Saint-Soupplets (FR)
(72) Inventeur: DE CHASSEY, Cyril, 60300 Fontaine Chaalis (FR); NESPOULOUS, Charles, 92210 Saint Cloud (FR)
(74) Mandataire: Plasseraud IP
(86) Numéro de dépôt international: PCT/FR2016/053005
(87) Numéro de publication internationale: WO 2017/085417

(56) Documents cités:
- DE-U1-202013 101 170
- US-A1- 2004 211 862
- US-A1- 2012 056 041
- US-A1- 2012 083 945
- US-A1- 2014 145 026
- US-A1- 2015 321 755

## Description

### DOMAINE ET CONTEXTE DE L'INVENTION

La présente invention concerne les drones, c'est-à-dire les appareils volants légers sans pilote humain à bord, notamment les engins plus lourds que l'air propulsés par des hélices, capables de vol stationnaire.

S'agissant de drones capables de vol stationnaire, la configuration la plus répandue est la configuration à quatre hélices montées respectivement sur quatre bras, cette configuration étant aussi appelée 'quadricopter'. Toutefois, on trouve aussi des configurations à trois hélices ('tricopter'), des configurations à deux hélices ('bicopter' ou 'twincopter'), et même des configurations à une hélice avec un bras unique tournant formant voilure ; il y a bien entendu aussi des configurations à plus de quatre hélices. Toutes ces configurations sont visées par la présente invention.

Pour en revenir à la configuration 'quadricopter' de référence, on connaît par exemple celle enseignée par le document US20130068892. Il s'avère toutefois que ce genre d'appareil est relativement encombrant et n'est pas facile à transporter. Il a été proposé que certains éléments du drone puissent être repliés dans une configuration de transport comme enseigné par le document US20150259066. Toutefois, même en configuration repliée, l'encombrement du drone pour le transport n'est pas optimal. Le document US 2012/0056041 A1 divulgue, dans une de ses variantes, un 'quadricopter' avec une batterie au-dessous du chaque bras et fonctionnant comme un train d'atterrissage. Le dispositif de stockage d'énergie électrique dans les 'quadricopters' selon les documents US 2015/0321755 A1, US 2014/0145026 A1 et DE 20 2013 101 170 U1 se trouve dans le corps central. Le document US 2001/0211862 A1 divulgue un avion sans pilote avec une batterie dans chaque aile.

On remarque aussi que la batterie d'accumulateurs électriques représente un volume important, qu'elle soit intégrée ou pas au corps du drone.

Pour finir, selon un aspect encore plus important, les drones connus ont une autonomie de durée de vol que beaucoup d'utilisateurs jugent insuffisante.

Il subsiste donc un besoin d'optimiser encore l'architecture des drones, notamment pour augmenter leur autonomie en termes de durée de vol et aussi pour faciliter leur transport.

### BREF EXPOSE DE L'INVENTION

À cet effet, il est proposé ici un drone comprenant un corps central et un ou plusieurs bras, chaque bras comprenant une première extrémité montée sur le corps central, chaque bras comprenant au voisinage d'une deuxième extrémité au moins un moteur électrique et au moins une hélice couplée audit moteur électrique, caractérisé en ce que au moins un dispositif de stockage d'énergie électrique (typiquement une batterie) est reçu/hébergé (voire contenu) dans chaque bras entre ses première et deuxième extrémités. Cette configuration s'applique de façon particulièrement pertinente pour les drones comprenant au moins trois bras (B1,B2,B3,B4).

On remarque qu'au moins un dispositif de stockage d'énergie électrique est hébergé dans chaque bras.

Grâce à ces dispositions, on obtient plusieurs avantages. Tout d'abord, le stockage d'énergie électrique est ainsi distribué, avec une bonne répartition des masses. On optimise au passage les moments d'inertie mis en jeu dans les mouvements de roulis, tangage et lacet.

De plus, la taille du corps central peut être significativement réduite par rapport aux drones de l'art antérieur ce qui est favorable du point de vue aérodynamique (réduction de trainée).

Autrement dit, les dispositifs de stockage d'énergie électrique sont intégrés aux bras du drone ; ceci permet d'obtenir d'autres avantages concernant l'architecture mécanique du drone, ces avantages sont détaillés en fin de la présente description.

En outre, les différents dispositifs de stockage d'énergie électrique (e.g. des batteries) hébergés dans les bras peuvent être avantageusement raccordés électriquement en parallèle, ce qui permet de diminuer l'intensité prélevée sur chacune des batteries, notamment lors des pics d'appel de courant. Autrement dit, l'intensité qui sort de chaque batterie est beaucoup plus faible que l'intensité qui sort d'un pack de batteries unique central dans les drones de l'art antérieur. Ceci est favorable à l'autonomie en vol qui peut être sensiblement augmentée comme il sera vu plus loin.

Selon une variante, chaque moteur peut être alimenté essentiellement par la batterie qui est hébergée dans le bras à laquelle est attaché ledit moteur, sans liaison électrique entre les batteries ; ce qui permet d'éviter d'avoir un courant d'intensité substantielle qui passe par la zone du corps central, et d'améliorer le mutisme électromagnétique général de la commande.

Dans divers modes de réalisation de l'invention, on peut éventuellement avoir recours en outre à l'une et/ou à l'autre des dispositions suivantes :
- les dispositifs de stockage d'énergie électrique hébergés dans les bras représentent l'essentiel de l'énergie électrique nécessaire à la sustentation et au vol. On peut ainsi avoir un corps central de faibles dimensions ; cela n'exclut pour autant la possible présence d'une batterie auxiliaire dans le corps central.
- chaque bras (Bi) est pourvu d'un ensemble (4i) d'éléments de stockage d'énergie lesdits ensembles étant raccordés électriquement en parallèle via le corps central ; ceci permet de choisir des éléments de batterie à puissance adaptée et cout modéré.
- selon une autre solution, chaque bras (Bi) est pourvu d'un ensemble (4i) d'éléments de stockage d'énergie électrique qui alimente essentiellement le moteur (Mi) correspondant attaché en bout de bras ; chaque moteur est ainsi principalement alimenté par l'ensemble d'éléments de batterie le plus proche, ce qui permet de réduire la pollution électromagnétique ;
- chaque bras peut présenter une forme cylindrique et comprendre une enveloppe tubulaire dans laquelle sont hébergées une ou plusieurs dispositifs de stockage d'énergie électrique de forme cylindrique ; ce qui représente une forme optimum pour loger un maximum d'énergie électrique dans un bras qui reste de diamètre raisonnable, et ne crée pas de traînée aérodynamique trop importante ; de plus ceci correspond à une forme standard et commune des éléments de batteries ;
- chaque bras est monté sur le corps de manière amovible au moyen d'un accouplement et est configuré pour être détaché du corps central, notamment à des fins de recharge des batteries électriques et/ou de transport du drone sous forme compacte ;
- l'accouplement peut comprendre une interface mécanique et une interface électrique de préférence combinées ensemble ; ce qui autorise un montage rapide et un démontage tout aussi rapide, pour le couplage combiné mécanique et électrique ; le mouvement de couplage peut inclure de préférence un mouvement simple de translation, sans exclure un mouvement de rotation de type baïonnette en fin de course;
- l'interface mécanique peut comprendre un système d'alignement angulaire du bras autour de son axe principal du bras (W1) par rapport à un logement de réception prévu dans le corps central ; on peut ainsi garantir que les axes des hélices coïncident avec l'axe général du drone ;
- par exemple le système d'alignement angulaire peut comprendre un pion saillant sur la première extrémité du bras, reçu dans une rainure correspondante dans le logement de réception ; ceci représente solution très simple à mettre en œuvre ;
- l'interface mécanique comprend un dispositif de verrouillage avec une fonction de verrouillage passif (insertion par indexation angulaire puis translation et clipsage) et une fonction de déverrouillage rapide ; le démontage est ainsi très aisé et très rapide.
- pour chaque bras, le dispositif de stockage d'énergie électrique s'étend sur une longueur LB à partir de l'axe d'hélice et plus de 40% de la longueur LB est refroidi le flux d'air impulsé directement par l'hélice en bout de bras; ceci est avantageux par rapport à la configuration standard où le pack batterie en central n'est pas refroidi de façon optimale par le flux des pales ;
- selon une option, il est prévu un pied à chaque deuxième extrémité de bras. Ceci concourt à une bonne robustesse de l'atterrissage quel que soit l'incidence, ceci permet aussi de loger des éléments de captation du côté inférieur du corps central.
- le corps est pourvu d'un dispositif de captation d'images sous forme d'appareil photo et/ou de caméra vidéo ; le drone peut ainsi collecter en vol des images et/ou des vidéos pour exploitation en temps réel ou en différé.
- le dispositif de captation d'images est intégré dans le corps et son objectif est dirigé vers le bas ; on peut ainsi prendre des clichés et/ou des vidéos des sites survolés par le drone
- les dispositifs de stockage d'énergie électrique comprennent des batteries rechargeables et/ou des super condensateurs ;
- Le drone peut être formé comme un quadricopter avec quatre bras et quatre hélices ; ce qui représente un bon compromis d'architecture entre coût et simplicité du système de pilotage.

### EXPOSE DES FIGURES

D'autres caractéristiques et avantages de l'invention apparaîtront au cours de la description suivante d'une de ses formes de réalisation, donnée à titre d'exemple non limitatif, en regard des dessins joints, sur lesquels :
- la figure 1 représente en perspective un drone selon l'invention,
- la figure 2 représente en vue de dessus le drone de la figure 1 selon l'invention, et
- la figure 3 représente une vue schématique en élévation,
- la figure 4 représente plus en détail l'interface mécanique et électrique entre le corps et un bras,
- la figure 5 représente un diagramme électrique,
- la figure 6 représente une coupe transversale du bras dans son logement appartenant au corps central,
- la figure 7 représente une configuration de recharge des sous-ensembles de bras,
- la figure 8 représente un pack de batteries électriques hébergées dans un des bras.

Sur les différentes figures, les mêmes références désignent des éléments identiques ou similaires.

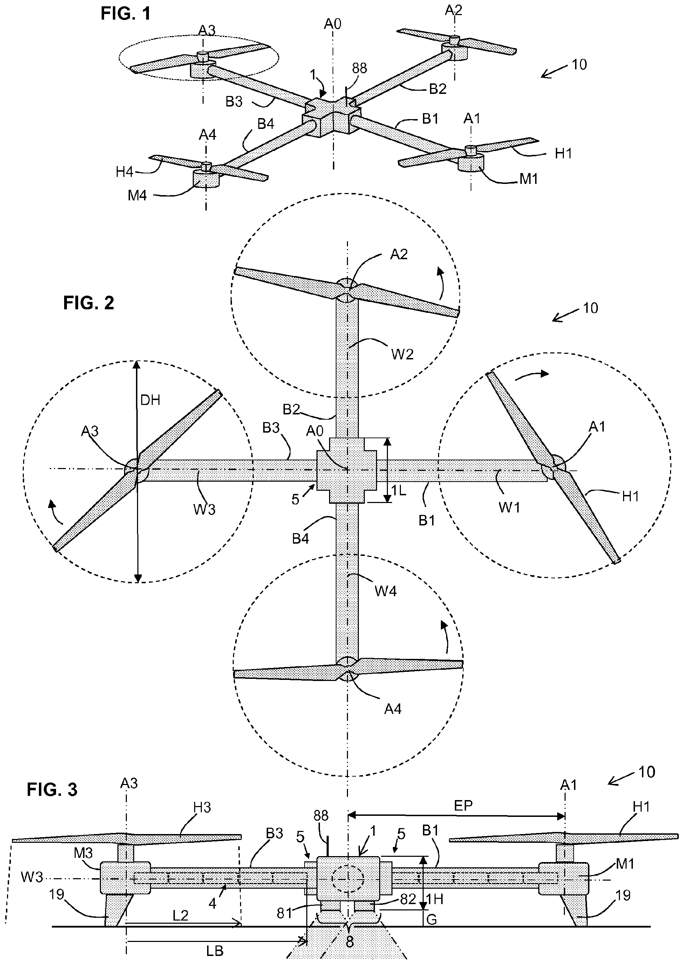

Les figures 1 à 3 représentent un drone **10** selon un exemple de réalisation de la présente invention. Il s'agit d'une configuration classique à quatre hélices, chacune des hélices étant agencée au bout d'un bras.

Plus précisément, le drone comprend un corps central **1** qui est situé sensiblement au centre des positions des hélices et par lequel passe l'axe général **A0** du drone. À partir du corps central s'étendent, en forme de croix, quatre bras **2** notés respectivement **B1 B2 B3 B4,** génériquement notés **2** ou **Bi** (i désigne un indice qui peut aller ici de 1 à 4).

Au bout de chaque bras est attaché un moteur électrique, les moteurs électriques étant repérés respectivement **M1 M2 M3 M4** génériquement notés **Mi.** Sur l'axe de chaque moteur est fixée une hélice propulsive, les hélices étant repérées respectivement **H1 H2 H3 H4.** Comme connu en soi deux hélices tournent dans un sens et les deux autres dans l'autre sens pour équilibrer substantiellement les couples résistants.

Chaque bras **Bi** comprend une première extrémité **21** encastrée dans le corps central et une deuxième extrémité **22** au voisinage de laquelle est attaché le moteur respectif **Mi.**

Il faut remarquer que, au lieu de quatre bras, le drone en question pourrait avoir trois bras, cinq bras, six bras, ou plus de six bras ; autrement dit le drone **10** a au moins trois bras.

Avantageusement, chaque bras **Bi** héberge au moins un dispositif de stockage et de restitution d'énergie électrique (aussi appelé de manière plus courte 'dispositif de stockage d'énergie électrique'). Celui-ci est dans l'exemple illustré une batterie d'accumulateur d'énergie électrique, baptisée brièvement 'batterie' ; les batteries sont repérées respectivement **41 42 43 44** (notation générique **4i**).

La batterie **4i** hébergée dans un bras **Bi** est la source principale d'énergie électrique du moteur électrique **Mi** attaché en bout de bras. Plus précisément, la batterie **B1** est la source principale d'énergie électrique du moteur **M1,** et ainsi de suite pour **B2,M2,** pour B3,M3, et pour B4,M4.

Ainsi, comme illustrée ici, il n'y a pas une batterie centrale attachée au corps central du drone. Il n'est pas exclu qu'il y ait une réserve d'énergie électrique liée au corps central **1** notamment pour conserver des données dans l'unité de commande électronique pour une raison qui sera explicitée plus loin.

De façon préférentielle, l'essentiel de l'énergie électrique nécessaire à la sustentation et au vol est constitué par les batteries hébergées dans les bras, et optionnellement les batteries hébergées dans les bras constituent la totalité de l'énergie électrique nécessaire à la sustentation et au vol.

Toutefois il n'est pas exclu d'avoir une batterie de secours agencée dans le corps central. Mais d'une façon générale, on s'arrange pour que les batteries électriques hébergées dans les bras représentent plus de 75 % de l'énergie électrique disponible à bord, préférentiellement plus de 90 % de l'énergie électrique disponible à bord.

Dans chaque bras, un ensemble **4** de cinq éléments de batteries sont disposés les uns à la suite des autres, et ils occupent la majeure partie de la longueur du bras ; lesdits éléments de batteries sont connectés électriquement en mode série par un faisceau **3** de bras qui sera détaillé plus loin. Bien entendu, au lieu de cinq éléments, on pourrait avoir moins de cinq éléments ou plus de cinq éléments.

On remarque que pour chaque bras, les éléments de batteries occupent la majeure partie de la longueur du bras, en pratique ils s'étendent sur plus de 85% de la longueur du bras 2. Vu autrement, ils s'étendent sur plus de 70% de l'entraxe A0-Ai.

Selon un aspect avantageux, chaque bras **Bi** est monté de façon amovible sur le corps central **1,** c'est-à-dire le bras peut être désaccouplé et le drone ainsi démonté. Après démontage des quatre bras, le drone se présente comme un ensemble de cinq éléments disjoints. Par conséquent, le drone peut être agencé sous une forme très compacte les bras étant parallèles les uns aux autres, et le corps central ayant des dimensions petites (si on le compare au corps principal de drones existants) ; on peut alors facilement transporter le drone.

Dans l'exemple illustré, pour un diamètre de pale de 30cm, le corps central peut être circonscrit dans un cube de côté de moins de 10 cm.

Ainsi, les dimensions du corps central étant fortement réduites, il est possible de transporter le drone à l'état démonté dans un petit contenant, par exemple un sac à dos.

Plus généralement, pour un diamètre de pale noté **DH,** le corps central **1** pourra être circonscrit dans un cube de côté de moins de 1/3 de DH.

En particulier la hauteur **1H** du corps central sera inférieure à 25% de **DH** et la largeur horizontale du corps central noté **1L** sera inférieure à 40% de DH. La distance **EP** entre axe d'hélice et axe principal du drone A0 sera typiquement comprise entre 0,7 DH et 1,5 DH.

On note ici que la forme du corps central dans le plan horizontal peut être quelconque : une forme en croix comme illustré, une forme octogonale, une forme de disque, etc. L'enveloppe **12** du corps central est formée de préférence dans un matériau léger et résistant, par exemple un plastique haute performance, ou un composite fibré (verre ou carbone).

Dans l'exemple illustré, les bras et les éléments de batteries sont de forme cylindrique. Les éléments de batteries sont hébergés dans une enveloppe tubulaire **25** qui forme la structure portante du bras. On pourra former l'enveloppe tubulaire en matériau à fibre de carbone.

L'épaisseur de l'enveloppe **25** notée **E2** peut être réduite à 1 ou 0,5 mm pour un diamètre extérieur du bras **D2** de 2 à 4 cm.

Chaque bras est monté sur le corps de manière amovible au moyen d'un accouplement détachable **5.**

L'accouplement **5** comprend une interface mécanique et une interface électrique. L'interface électrique est formée par une connexion **7i** avec un connecteur **15** agencé en bout de bras du côté de la première extrémité **21** et une contrepartie **16** disposé en vis-à-vis dans le corps central. Lorsque l'on enfonce le bras dans le logement de réception **11** le connecteur et sa contrepartie sont accouplés. Plusieurs conducteurs électriques transitent par cette connexion, typiquement entre 4 et 8 conducteurs. Les conducteurs reliés ou connecteur **15** forme un faisceau **3** de bras, alors que du côté du corps central, les conducteurs reliés à la contrepartie de connexion **16** sont reliés soit à la carte électronique principale **60** où se trouve l'unité centrale électronique **6** soit pour certains à un bus bar de puissance.

L'interface mécanique comprend un système d'alignement angulaire du bras autour de son axe principal du bras **W1** par rapport à un logement de réception **11** prévu dans le corps central. En l'occurrence, il est prévu un pion saillant **27** sur la première extrémité du bras reçu dans une rainure **17** correspondante dans le logement de réception **11.**

Dans l'exemple illustré, où le drone est utilisé comme collecteur de clichés, on dispose un dispositif de captation d'images **8.** Plus précisément selon l'exemple particulier illustré, il est prévu un premier dispositif de prise de vue **81** classique fonctionnement dans le domaine visible et un deuxième dispositif de prise de vue **82** fonctionnant dans le domaine infrarouge.

De plus, comme visible à la figure 3, il est prévu un pied **19** à la deuxième extrémité **22** de chaque bras. On prévoit avantageusement une garde au sol **G** suffisante pour que lors d'un atterrissage du drone sur un sol pas tout à fait plat, les objectifs des dispositifs de captation optique 81,82 ne touchent pas et ne soient pas endommagés.

On note au passage qu'il n'est pas exclu de prévoir des carénages d'hélices, de tels carénages étant attachés au bras.

Sur le corps central, on prévoit une antenne **88** de réception des signaux transmis par un dispositif de télécommande connu en soi.

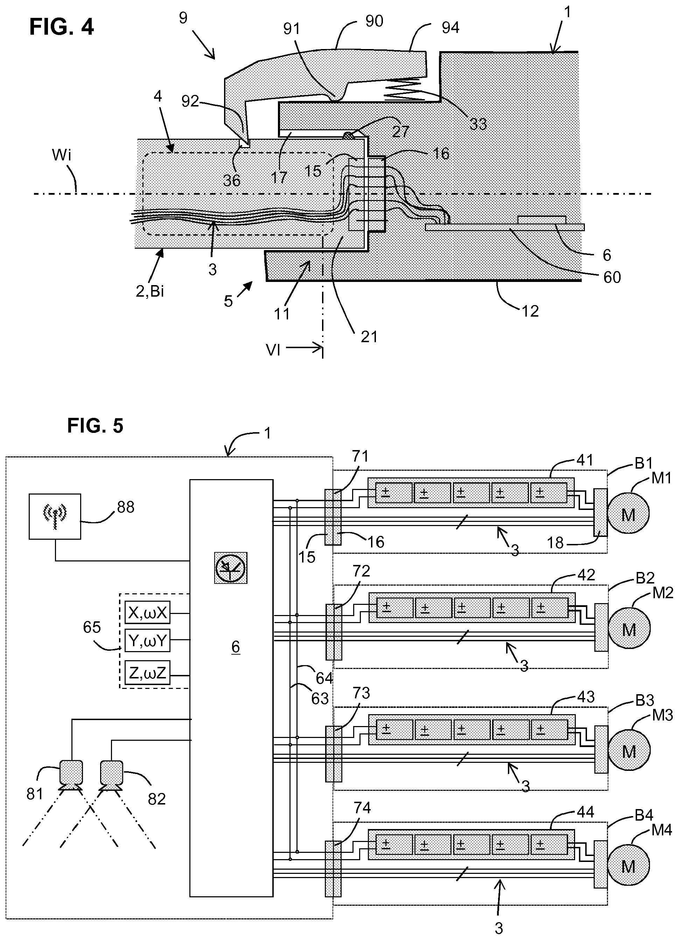

Dans l'interface/accouplement **5** illustré à la figure 4, il peut être prévu un dispositif de verrouillage **9** avec une fonction de verrouillage formé par un basculeur **90** pivotant sur un appui **92.** Le basculeur comprend un crochet **92** qui s'engage dans une encoche **36** ménagée dans l'enveloppe tubulaire **25** du bras. Le basculeur **90** est rappelé vers la position de verrouillage par un ressort **33.**

En appuyant sur l'arrière du basculeur **94** à l'encontre du ressort **33,** on peut libérer le verrouillage et retirer le bras le long de son axe **W.** Ce faisant, le connecteur électrique est désaccouplé et les signaux de commande émis par l'unité centrale ne peuvent plus exciter le moteur, ce qui est un gage de sécurité par rapport aux configurations simplement repliées.

On peut prévoir optionnellement, pour chaque branche/bras **Bi,** que les conducteurs électriques de puissance qui relient la batterie **4i** au moteur Mi transitent via le connecteur **7i** de sorte que le désaccouplement du connecteur interrompt non seulement les signaux de commande mais aussi la liaison électrique de puissance entre la batterie et le moteur Mi, ce qui est un gage de sécurité complémentaire.

Il faut comprendre que le verrouillage tel que présenté ci-dessus n'est pas essentiel ; on peut prévoir un assemblage à friction, un clipsage réversible, ou autre solution de maintien.

Comme illustré à la figure 5, il apparaît qu'une électronique de commande locale **18** auprès du moteur reçoit des signaux de commande en provenance de l'unité centrale électronique et commute la puissance électrique fournie par la batterie locale pour piloter le moteur en suivant une consigne de temps réel dynamique, par exemple en modulation cyclique de type PWM.

Une unité centrale de commande **6** comprend un ou plusieurs microprocesseurs, des accéléromètres linéaires et/ou angulaires **65,** des mini-gyroscopes, des moyens de communication sans fil,...

La puissance électrique délivrée par les éléments de batteries au moteur est commutée localement par l'électronique de commande locale **18.** Ceci permet de réduire la pollution électromagnétique des transitions de puissance.

Dans la configuration représentée, où les quatre batteries sont raccordées électriquement en parallèle, on prévoit un bus-bar de positif repéré **64** et un bus-bar négatif repéré **63.** Si un pic d'intensité est appelé sur un des moteurs, les quatre batteries contribuent à satisfaire le niveau d'intensité requis, ce qui permet de répartir les besoins de pic de puissance, et par conséquent de soulager les spécifications en puissance nécessaire pour les batteries.

Les bus-bars de liaison **63,64** peuvent être hébergés sur la carte électronique **60.**

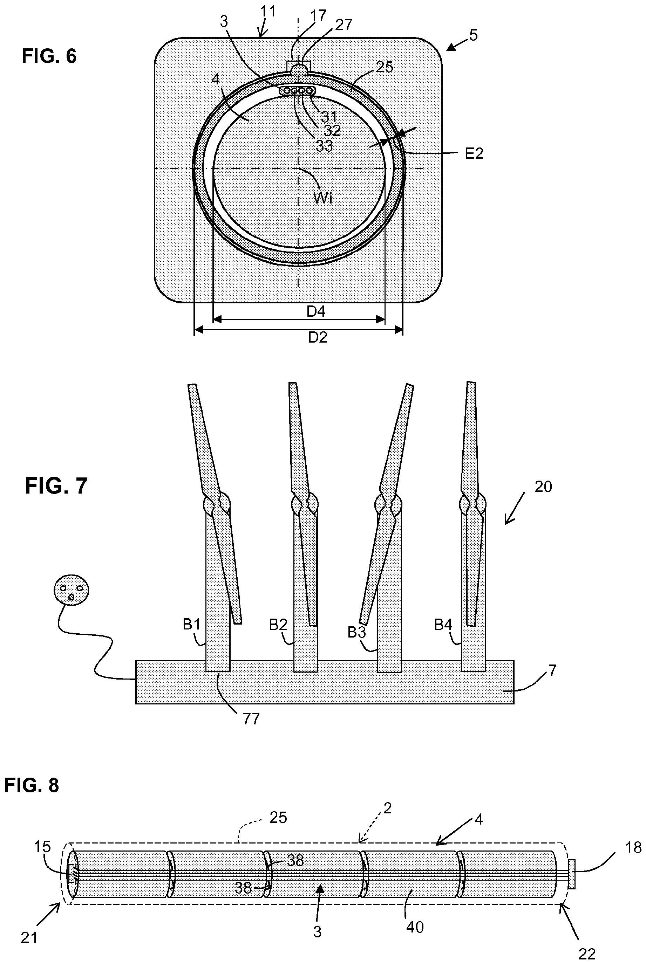

Comme illustré à la figure 7, une fois que les bras sont démontés, l'utilisateur du drone peut enficher dans un socle de recharge **7** les bras équipés **20** (c'est-à-dire bras **Bi** + moteur **Mi** + hélice) aussi appelés 'ensemble de bras' **20.** Le socle de recharge **7** comprend des alvéoles **77** avec une interface mécanique et électrique similaire à celle déjà décrite pour le corps central.

Les éléments de batteries rechargeables utilisées ici sont de type Lithium Ion ou lithium polymère, ou encore supercapacités (supercondensateurs) ou bien tout autre technologie équivalente disponible pour stocker de l'énergie électrique selon un ratio énergie/masse avantageux. L'utilisation de piles électriques non rechargeables n'est pas exclue.

Avantageusement, on peut choisir pour le stockage d'énergie électrique des éléments de batteries ayant une très bonne disponibilité technique et commerciale, avec un critère d'énergie massique le plus élevé possible ; Par exemple, une forme cylindrique de diamètre extérieur **D4** compris entre 1 et 3 centimètres et de longueurs comprises entre 5 et 8 centimètres.

Les hélices illustrées sont à deux pales ; bien entendu on pourrait avoir des hélices à trois pales, à quatre pales ; on pourrait aussi avoir deux hélices contrarotatives l'une au-dessus de l'autre.

Le faisceau de bras **3** comprend plusieurs conducteurs **31,32,33,** électriques qui transmettent les commandes en couple/vitesse du moteur en bout de bras. De plus, le faisceau **3** comprend les raccordements **38** en mode série d'un élément de batteries à un autre. On remarque que le faisceau de bras peut être logé à l'intérieur de l'enveloppe structurelle **25** du bras comme illustré à la figure 6, mais en variante, le faisceau de bras **3** pourrait longer par l'extérieur l'enveloppe structurelle.

Comme visible sur la figure 3, le flux d'air impulsé directement par l'hélice Hi balaye le bras sur un rayon **L2** par rapport à l'axe d'hélice, ce qui est à comparer avec la longueur noté **LB** sur laquelle s'étendent les éléments de stockage d'énergie. Avantageusement on peut avoir la relation **L2** > 0,4 **LB.** Ceci permet de refroidir de manière optimale les batteries en particulier lorsqu'elles sont sollicitées à leur puissance maximale.

Le drone **10** présenté ci-dessus peut être utilisé pour des missions de surveillance de cultures, de vergers, de vignobles.

La durée de vol entre recharge est supérieure à 30 minutes, préférentiellement supérieur à 45 minutes, et peut même atteindre 1 heure.

Comme annoncé plus haut, l'intégration des batteries dans les bras permet une optimisation induite d'architecture et une diminution de poids. En effet, on met à profit la structure des bras qui doit déjà supporter les efforts liés au propulseur, et on utilise cette structure pour faire office de protection mécanique des batteries ; on peut ainsi loger des batteries quasi nues à l'intérieur des bras ; à l'inverse, aucune structure n'est nécessaire dans le corps central pour la fixation et/ou la protection des batteries. Ceci est à comparer à une disposition de l'art antérieur avec un pack de batteries centralisé qui possède sa propre enveloppe de protection mécanique et impose une contrainte de fixation sur le corps central.

## Revendications

1. Drone (10) comprenant un corps central (1) et un ou plusieurs bras (B1,B2,B3,B4), chaque bras comprenant une première extrémité (21) montée sur le corps central, chaque bras comprenant au voisinage d'une deuxième extrémité (22) au moins un moteur électrique (M1,M2,M3,M4) et au moins une hélice (H1,H2,H3,H4) couplée audit moteur électrique, **caractérisé en ce que** au moins un dispositif de stockage d'énergie électrique (41,42,43,44) est hébergé dans chaque bras entre ses première et deuxième extrémités (21,22).

2. Drone selon la revendication 1, comprenant au moins trois bras (B1,B2,B3,B4), et de préférence quatre bras.

3. Drone selon l'une des revendications 1 à 2, dans lequel les dispositifs de stockage d'énergie électrique hébergés dans les bras représentent l'essentiel de l'énergie électrique nécessaire à la sustentation et au vol.

4. Drone selon l'une des revendications 1 à 3, dans lequel chaque bras (Bi) est pourvu d'un ensemble (4i) d'éléments de stockage d'énergie, lesdits ensembles étant raccordés électriquement en parallèle via le corps central.

5. Drone selon l'une des revendications 1 à 4, dans lequel chaque bras présente une forme cylindrique et comprend une enveloppe tubulaire (25) dans laquelle sont hébergés une ou plusieurs éléments (40) de stockage d'énergie électriques (4) de forme cylindrique.

6. Drone selon l'une des revendications 1 à 5, dans lequel chaque bras est monté sur le corps de manière amovible au moyen d'un accouplement (5) et est configuré pour être détaché du corps central.

7. Drone selon la revendication 6, dans lequel l'accouplement comprend une interface mécanique et une interface électrique.

8. Drone selon la revendication 7, dans lequel l'interface mécanique comprend un système d'alignement angulaire du bras autour de son axe principal du bras (W1) par rapport à un logement de réception prévu dans le corps central.

9. Drone selon la revendication 8, dans lequel le système d'alignement angulaire est formé par un pion saillant (27) sur la première extrémité du bras reçu dans une rainure (17) correspondante dans le logement de réception.

10. Drone selon l'une des revendications 7 à 9, dans lequel l'interface mécanique comprend un dispositif de verrouillage (9) avec une fonction de verrouillage passif, à savoir insertion par translation avec indexation angulaire et clipsage, et une fonction de déverrouillage rapide.

11. Drone selon l'une des revendications précédentes, dans lequel pour chaque bras, le dispositif de stockage d'énergie électrique s'étend sur une longueur LB à partir de l'axe d'hélice et plus de 40% de la longueur LB est refroidi le flux d'air impulsé directement par l'hélice en bout de bras.

## Patentansprüche

1. Drohne (10), umfassend einen Zentralkörper (1) und einen oder mehrere Arme (B1, B2, B3, B4), wobei jeder Arm ein erstes Ende (21) umfasst, das an dem Zentralkörper montiert ist, wobei jeder Arm in der Nähe eines zweiten Endes (22) mindestens einen Elektromotor (M1, M2, M3, M4) und mindestens einen Propeller (H1, H2, H3, H4) umfasst, der mit dem Elektromotor gekoppelt ist, **dadurch gekennzeichnet, dass** wenigstens eine Speichereinrichtung für elektrische Energie (41, 42, 43, 44) in jedem Arm zwischen seinem ersten und seinem zweiten Ende (21, 22) aufgenommen ist.

2. Drohne nach Anspruch 1, umfassend mindestens drei Arme (B1, B2, B3, B4) und vorzugsweise vier Arme.

3. Drohne nach einem der Ansprüche 1 bis 2, wobei die in den Armen untergebrachten Speichereinrichtungen für elektrische Energie den wesentlichen Teil der zum Abheben und zum Fliegen benötigten elektrischen Energie repräsentieren.

4. Drohne nach einem der Ansprüche 1 bis 3, wobei jeder Arm (Bi) mit einer Anordnung (4i) von Energiespeicherelementen versehen ist, wobei die Anordnungen über den Zentralkörper elektrisch parallel verbunden sind.

5. Drohne nach einem der Ansprüche 1 bis 4, wobei jeder Arm eine zylindrische Form aufweist und ein rohrförmiges Gehäuse (25) umfasst, in dem ein oder mehrere elektrische Energiespeicherelemente (40) (4) mit zylindrischer Form untergebracht sind.

6. Drohne nach einem der Ansprüche 1 bis 5, wobei jeder Arm mittels einer Kupplung (5) lösbar am Körper befestigt und konfiguriert ist, um vom Zentralkörper gelöst zu werden.

7. Drohne nach Anspruch 6, wobei die Kupplung eine mechanische Schnittstelle und eine elektrische Schnittstelle umfasst.

8. Drohne nach Anspruch 7, worin die mechanische Schnittstelle ein System zur Winkelausrichtung des Arms um seine Hauptachse des Arms (W1) in Bezug auf eine im Zentralkörper vorgesehene Aufnahme umfasst.

9. Drohne nach Anspruch 8, wobei das System zur Winkelausrichtung durch einen vorstehenden Stift (27) am ersten Ende des Arms gebildet ist, der in einer entsprechenden Nut (17) in der Aufnahme aufgenommen ist.

10. Drohne nach einem der Ansprüche 7 bis 9, wobei die mechanische Schnittstelle eine Verriegelungseinrichtung (9) mit einer Passiv-Verriegelungsfunktion umfasst, nämlich Einsetzen durch Translationsbewegung mit Winkelindexierung und Schnappverbindung, sowie mit einer Schnellentriegelungsfunktion.

11. Drohne nach einem der vorhergehenden Ansprüche, wobei für jeden Arm sich die Speichereinrichtung für elektrische Energie über eine Länge LB ausgehend von der Propellerachse erstreckt, und wobei mehr als 40% der Länge LB abgekühlt wird durch den Luftstrom, der direkt durch den Propeller am Arm-Ende erzeugt wird.

## Claims

1. Drone (10) comprising a central body (1) and one or more arms (B1,B2,B3,B4), each arm comprising a first end (21) mounted on the central body, each arm comprising at or near a second end (22) at least one motor (Ml,M2,M3,M4) and at least one propeller (H1,H2,H3,H4) coupled to said motor, **characterized in that** at least one electrical energy storage device (41,42,43,44) is housed in each arm between its first and second ends (21,22).

2. Drone according to claim 1, comprising at least three arms (B1,B2,B3,B4), and preferably four arms.

3. Drone according to any of the claims 1 to 2, wherein the electrical energy storage devices housed in the arms account for most of the electrical energy required for hovering and flight.

4. Drone according to any of the claims 1 to 3, wherein each arm (Bi) is provided with an assembly (4i) of energy storage cells, said assemblies being electrically connected in parallel via the central body.

5. Drone according to any of the claims 1 to 4, wherein each arm has a cylindrical shape and comprises a tubular casing (25) in which are housed one or more electrical energy storage (4) cells (40) of cylindrical shape.

6. Drone according to any of the claims 1 to 5, wherein each arm is removably mounted on the body by means of a coupling (5) and is configured to be detached from the central body.

7. Drone according to claim 6, wherein the coupling comprises a mechanical interface and an electrical interface.

8. Drone according to claim 7, wherein the mechanical interface comprises a system for angular alignment of the arm about its main axis of the arm (Wl) with respect to a receiving housing provided in the central body.

9. Drone according to claim 8, wherein the system for angular alignment is formed by a projecting pin (27) on the first end of the arm, received in a corresponding groove (17) in the receiving housing.

10. Drone according to any of the claims 7 to 9, wherein the mechanical interface comprises a locking device (9) with a passive locking function, namely insertion by translation with angular indexing and snap-fitting, and a quick release function.

11. Drone according to any of the preceding claims, wherein, for each arm, the electrical energy storage device extends for a length LB from the propeller axis and more than 40% of the length LB is cooled by the air flow directly driven by the propeller at the end of the arm.
